# FASCICULE DE BREVET EUROPEEN

(11) **EP 4 320 721 B1**
(45) Date de publication et mention de la délivrance du brevet: **26.11.2025**
(21) Numéro de dépôt: 22719971.8
(22) Date de dépôt: 05.04.2022
(51) Int. Cl.: H02P 29/10

(54) **DISPOSITIF ET MÉTHODE DE CONTRÔLE D'AU MOINS UN MOTEUR ÉLECTRIQUE POUR PROPULSEUR D'AÉRONEF**
VORRICHTUNG UND VERFAHREN ZUR STEUERUNG MINDESTENS EINES ELEKTROMOTORS FÜR EINE FLUGZEUGANTRIEBSANORDNUNG
DEVICE AND METHOD FOR CONTROLLING A LEAST ONE ELECTRIC MOTOR FOR AN AIRCRAFT-PROPELLING ASSEMBLY

(30) Priorité: 09.04.2021 FR 2103668
(43) Date de publication de la demande: 14.02.2024
(73) Titulaire: Safran Helicopter Engines, 64510 Bordes (FR); Safran Electrical & Power, 31702 Blagnac Cedex (FR)
(72) Inventeur: BEDDOK, Stéphane Meyer, 77550 MOISSY-CRAMAYEL (FR); LEMAY, David Bernard Martin, 77550 MOISSY-CRAMAYEL (FR); RAMBAUD, Julien Marc Nicolas, 77550 MOISSY-CRAMAYEL (FR)
(74) Mandataire: Regimbeau
(86) Numéro de dépôt international: PCT/FR2022/050630
(87) Numéro de publication internationale: WO 2022/214761

(56) Documents cités:
- WO-A1-2020/115416
- US-A1- 2016 340 051
- US-A1- 2021 039 796

## Description

### DOMAINE DE L'INVENTION

La présente invention concerne le domaine des aéronefs propulsés par un ou plusieurs moteurs électriques entrainant au moins une hélice ou un rotor à pales.

### ETAT DE LA TECHNIQUE

Dans ce qui suit, on désigne par propulseur électrique d'un aéronef un ensemble formé par au moins une hélice ou un rotor à pales et au moins un moteur électrique pour leur entrainement. Généralement, un moteur électrique est alimenté par une batterie ou un générateur. La batterie ou le générateur fournissent au moteur une tension et un courant électrique d'alimentation. Cette tension électrique et ce courant permettent de faire tourner le moteur et de convertir l'énergie électrique en énergie mécanique. Deux grandeurs permettent de quantifier l'énergie mécanique produite : le couple et la vitesse de rotation du rotor du moteur.

Notamment dans le cas d'une alimentation par batterie - mais cela est aussi vrai pour un générateur - la tension d'alimentation fournie peut varier. Plus précisément, à mesure que la batterie se décharge, la tension d'alimentation diminue. Ainsi, dans le cas d'un propulseur électrique d'un aéronef, en l'absence de contrôle, lorsque la tension de la batterie passe en dessous d'un seuil déterminé, la vitesse de rotation du moteur du propulseur électrique ne peut plus être maintenue ce qui engendre une chute de la puissance mécanique produite par le propulseur électrique. Il peut en résulter une perte de poussée et donc un décrochage de l'aéronef. En d'autres termes, lorsque la tension de la batterie passe sous un certain seuil, le niveau de couple fourni par le moteur électrique, à une vitesse donnée, diminue.

Il est donc essentiel de contrôler la puissance électrique fournie au moteur électrique d'un propulseur électrique.

En outre, il est bien connu qu'une machine électrique produit une tension dite tension de force électromotrice (FEM) quand elle est entrainée en vitesse. Cette tension est proportionnelle à la vitesse de rotation. Dans le cas d'un fonctionnement de la machine électrique en moteur, cette FEM est produite également mais s'oppose au courant d'alimentation du moteur. Elle est alors appelée "force contre-électromotrice" (FCEM).

Pour fonctionner en mode moteur, c'est-à-dire avec un couple entrainant, la machine électrique doit être alimentée par une tension supérieure à la FCEM du moteur.

La plupart des sources d'alimentation (batterie, générateur, pile à combustible, etc.) ont des tensions d'alimentation variables et lorsque, dans certaines situations de vie, la tension d'alimentation du moteur électrique est trop faible (i.e. inférieure à la FCEM du moteur), le moteur doit alors limiter soit son couple, soit sa vitesse de rotation. Dans le cas d'un propulseur électrique d'un aéronef, ces limitations peuvent générer des soucis opérationnels tels que des pertes de portance ou de poussée d'une hélice ou d'un rotor, avec un impact sur le contrôle de l'aéronef.

Cette problématique se trouve accentuée lorsque plusieurs moteurs, chacun alimenté par une source de tension différente, sont utilisés pour entraîner une même hélice ou un même rotor. Dans ce cas, les moteurs doivent fonctionner à la même vitesse. Or, la vitesse est imposée par le moteur qui a la tension d'alimentation la plus forte, alors que la FCEM demeure fixe pour chaque moteur. Dans ce cas de figure, la capacité de fournir un couple est directement liée à la différence entre la tension d'alimentation et la FCEM. Si cette différence s'annule, le couple est nul et le moteur ne fournit plus de puissance mécanique. Dans la pratique les solutions de contrôle existantes empêchent le couple de devenir négatif, mais par contre n'empêchent pas l'annulation du couple.

Le moteur dont la tension d'alimentation est la plus basse ne pourra plus suivre la vitesse imposée par le ou les autres moteurs. Si rien n'est fait, il va alors subitement décrocher en ne fournissant plus aucune puissance à l'hélice ou au rotor. Le ou les autres moteurs devront alors fournir à eux seul toute la puissance requise par le propulseur.

Par ailleurs, la tension d'alimentation peut également varier en fonction d'autres paramètres, comme par exemple le vieillissement d'une batterie ou sa température. D'autre part, lors de l'entrainement d'une hélice ou d'un rotor par au moins un moteur électrique, la puissance à fournir est le produit de la vitesse de rotation par le couple que développe l'hélice ou le rotor. Le couple étant une fonction de la vitesse au carré, l'augmentation de la vitesse se traduit donc également par une augmentation de la puissance consommée selon la vitesse au cube et donc par une accentuation du phénomène de décharge batterie.

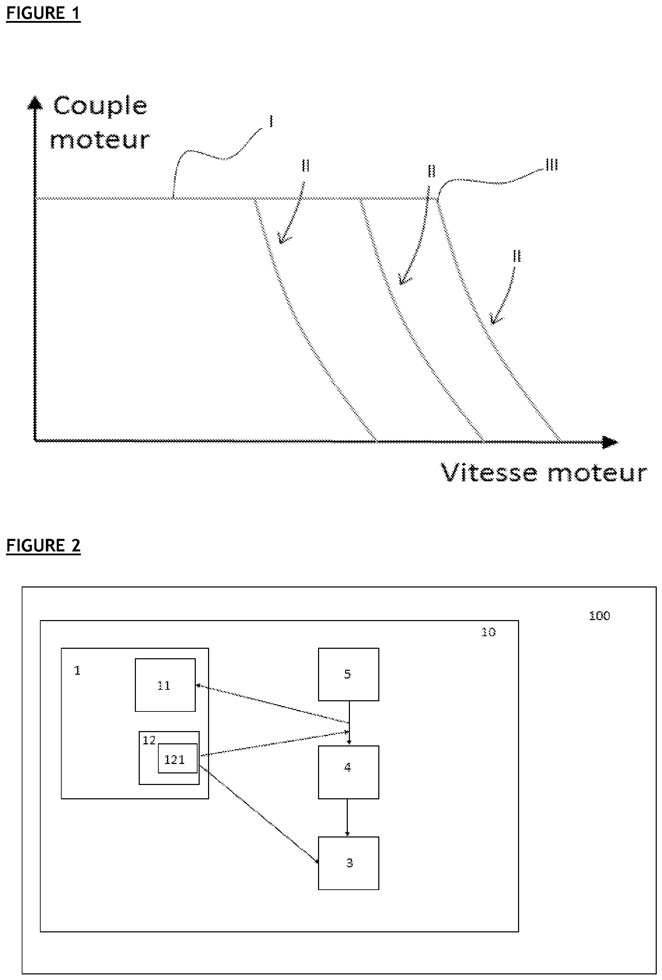

En référence à la figure 1, un moteur électrique est généralement caractérisé par son plan couple-vitesse. Ce plan décrit le domaine de couple que le moteur est capable de fournir en fonction de sa vitesse de rotation. Pour un moteur synchrone à aimants permanents autopiloté, ce domaine est généralement caractérisé par :
- Un premier segment I couvrant une assez large gamme de vitesse où le couple délivrable par le moteur est constant. Ce couple maximum peut en revanche être limité dans le temps à cause des problématiques thermiques du moteur ou de son électronique de puissance.
- Un deuxième segment II où le couple que peut fournir ce moteur décroît très rapidement avec la vitesse de rotation. En l'absence de défluxage, cette courbe est généralement très raide, ce qui fait que pour une très faible variation de vitesse le couple atteignable varie dans une amplitude très importante. C'est donc une zone de fonctionnement dans laquelle on ne souhaite généralement pas opérer.
- L'intersection de ces deux segments constitue un point de cassure III qui dépend des caractéristiques de conception du moteur et directement de sa tension d'alimentation. Ainsi, si la tension d'alimentation baisse, le point de cassure se déplace proportionnellement vers la gauche et la courbe décroissante se trouve alors translatée dans la même direction.

Actuellement pour pallier la baisse de la tension d'alimentation électrique du ou des moteur(s) en dessous de la force électromotrice du moteur, on connait deux principales solutions :
- Couper la commande du moteur en dessous d'un niveau de tension proche de sa force électromotrice, ou
- Défluxer le moteur électrique.

Le défluxage consiste à réduire le flux magnétique dans l'entrefer. Cette solution est simple à mettre en œuvre sur un moteur électrique synchrone à rotor bobiné car l'excitation peut être facilement contrôlée par le courant rotorique. Dans le cas de l'emploi de machines synchrones à aimants permanents (MSAP) privilégiées dans le domaine aéronautique car moins lourdes et disposant d'un meilleur rendement, le défluxage est délicat de par la présence des aimants au rotor.

Une solution de défluxage connue consiste néanmoins à déphaser le champ magnétique statorique en agissant sur la commande des courants de phases du moteur. Cette action permet de « combattre » le champ rotorique et ainsi d'abaisser artificiellement la force électromotrice du moteur. Le principal inconvénient de cette solution est qu'elle implique la commande d'une composante supplémentaire de courant électrique dans les phases moteur. Ce courant dit « direct » supplémentaire génère un fort échauffement du bobinage moteur et de l'électronique de puissance associée et ne participe pas à la création de couple. Le rendement se trouve donc dégradé avec une consommation de puissance électrique plus importante sur le réseau pour un même point de fonctionnement mécanique.

Dans le cas d'une application aéronautique, le défluxage permet de maintenir la vitesse de rotation du moteur malgré une tension d'alimentation plus faible que la FCEM du moteur. Avec une hélice à pas variable, le défluxage est utilisé pour maintenir la vitesse de l'hélice, mais le couple que peut fournir le moteur diminue avec le défluxage (qui implique une diminution du flux magnétique) et il faut alors agir sur le pas pour adapter le couple résistant de l'hélice au couple fourni par le moteur. Cette diminution du couple délivré à l'hélice présente l'inconvénient de faire baisser la poussée induite, avec des risques sur la contrôlabilité de l'aéronef.

Dans ce contexte, il est nécessaire de fournir un dispositif de contrôle permettant de d'optimiser la vitesse de rotation d'un moteur électrique en fonction d'une tension d'alimentation fournie.

Pour permettre cette optimisation de la vitesse de rotation du ou des moteurs électriques dans le cas d'un propulseur électrique comprenant une hélice (ou un rotor) entrainée par au moins un moteur électrique, la présente invention vise à moduler la vitesse de rotation de l'hélice en fonction de la tension d'alimentation minimum appliquée à un moteur ou à l'ensemble des moteurs qui l'entraînent.

WO 2020/115416A1 décrit un moteur qui comprend une machine synchrone à aimants permanents et une unité électronique de commande, la machine synchrone comportant un ou deux rotor(s) à aimants permanents et au moins un stator hexaphasé par rotor doté d'au moins deux ensembles triphasés formés chacun de trois bobines, électriquement couplées en étoile. L'unité électronique de commande comportant un onduleur de commande par stator muni de six bras indépendants configurés chacun pour piloter une phase d'un stator hexaphasé. Les ensembles triphasés sont découplées magnétiquement et électriquement l'un par rapport à un autre.

US 2016/340051 A1 décrit un réseau électrique pour un aéronef. Le réseau électrique comprend un générateur électrique synchrone à courant alternatif à champ bobiné dont le rotor bobiné est entraîné par un moteur à combustion interne. Le réseau comprend également un régulateur de tension configuré pour réguler la tension de sortie du générateur électrique en régulant l'intensité du champ magnétique de l'enroulement du rotor, et un moteur d'entraînement synchrone à courant alternatif couplé à un propulseur à pas variable respectif et alimenté par la sortie du générateur électrique.

US 2021/039796 A1 décrit un dispositif de propulsion redondant comprend une hélice et des moteurs électriques. Les moteurs électriques sont disposés par rapport à un arbre d'hélice de l'hélice de sorte que, autour de l'arbre d'hélice, au moins un des moteurs électriques est disposé à chacun des emplacements dans la direction longitudinale de l'arbre d'hélice. Les moteurs électriques sont disposés de telle sorte qu'un arbre de sortie de chacun des moteurs électriques ne chevauche pas un arbre de sortie d'un autre moteur électrique, vu dans la direction longitudinale de l'arbre d'hélice à partir de l'hélice.

### EXPOSE DE L'INVENTION

L'invention propose un dispositif selon la revendication 1.

D'autres aspects de ce dispositif sont définis dans les revendications dépendantes 2-4.

L'invention concerne également un propulseur électrique selon la revendication 5.

D'autres aspects de ce propulseur électrique sont définis dans les revendications 6-8.

L'invention concerne aussi un procédé selon la revendication 9.

Un autre aspect de ce procédé est défini dans la revendication 10.

L'invention concerne un aéronef selon la revendication 11.

### DESCRIPTION DES FIGURES

D'autres caractéristiques, buts et avantages de l'invention ressortiront de la description qui suit, qui est purement illustrative et non limitative, et qui doit être lue en regard du dessin annexé sur lequel :
La figure 1 est une représentation d'un plan couple-vitesse d'un moteur électrique.
La figure 2 est un schéma bloc d'un propulseur électrique comprenant un dispositif de contrôle selon l'invention.
La figure 3 est une représentation schématique d'un propulseur électrique comprenant plusieurs moteurs électriques en série.
La figure 4 est une représentation schématique d'un propulseur électrique comprenant plusieurs moteurs électriques en dérivation.
La figure 5 est un schéma bloc d'un procédé selon l'invention.

### DESCRIPTION DETAILLEE DE L'INVENTION

### Architecture générale

Selon un premier aspect, tel que schématisé sur la figure 2, l'invention propose un dispositif de contrôle 1 de la vitesse d'une hélice 3 entrainée par au moins un moteur électrique 4 d'aéronef 100. Typiquement (à titre d'exemple non limitatif), le (ou les) moteur 4 est alimenté par une batterie 5. De manière alternative ou en complément des batteries, la tension électrique d'alimentation peut également être fournie par des génératrices électriques et/ou des piles à combustible.

### Propulseur électrique

Le dispositif de contrôle 1 selon l'invention est conçu pour s'intégrer dans un propulseur électrique 10, lui-même objet de l'invention.

Typiquement, le propulseur électrique 10 comprend au moins une hélice 3 entrainée en rotation par un ou plusieurs moteurs électriques 4. En effet, il est possible qu'un seul moteur électrique 4 entraine l'hélice 3, ou que plusieurs moteurs électriques 4 entrainent la même hélice 3. Le, ou chaque, moteur électrique 4 est alimenté en énergie électrique sous la forme d'un signal électrique et fournit une énergie mécanique. Plus précisément, chaque moteur électrique 4 est alimenté par deux grandeurs électriques, une tension et une intensité, et délivre deux grandeurs mécaniques, une vitesse de rotation et un couple. Il est connu que, schématiquement, une variation de la fréquence du signal de tension en entrée fait varier la vitesse en sortie, et de même une variation de l'intensité du courant en entrée fait varier le couple en sortie.

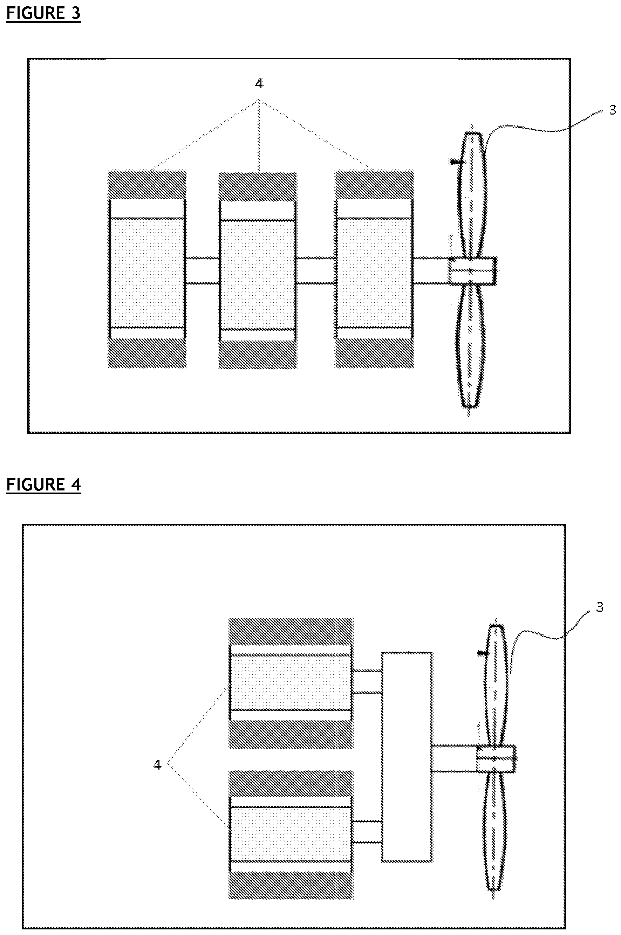

Dans le cas où plusieurs moteurs 4 entraînent une même hélice, on distingue deux architectures principales. En référence à la figure 3, on peut avoir plusieurs moteurs électriques 4 dont les stators sont montés en série sur un même arbre de façon à sommer leurs couples, et qui entraînent en rotation une seule hélice 3. Chaque stator peut être connecté à une source électrique par l'intermédiaire d'un onduleur dédié, la source électrique d'un stator pouvant être différente de celle du stator voisin.

Selon une autre disposition, en référence à la figure 4, il est possible d'avoir plusieurs moteurs 4 mécaniquement connectés en parallèle, dans ce cas chaque moteur électrique 4 possède son propre stator et son propre rotor. Un train d'engrenage peut permettre de combiner la rotation des différents moteurs électriques.

Selon ces deux modes de réalisation, les moteurs électriques 4 ont tous la même vitesse de rotation, imposée par le rotor ou un train d'engrenage auquel ils sont connectés mais fournissent chacun un couple distinct. Le couple fourni à l'hélice 3 est la somme de l'ensemble des couples fournis par les moteurs électriques 4.

En outre, comme cela est schématisé sur la figure 2, le propulseur électrique 10 peut comprendre une ou plusieurs batteries 5 (ou une autre source d'alimentation électrique) pour alimenter le, ou les, moteurs électrique 4. On peut par exemple avoir, une configuration dans laquelle une batterie 5 alimente une pluralité moteurs électriques 4, ou une autre configuration dans laquelle chaque moteur électrique est connecté à une batterie distincte.

### Dispositif de contrôle

Le dispositif de contrôle 1 peut notamment comprendre un organe de mesure 11 d'une tension électrique fournie au moteur 4, et un organe de contrôle 12 adapté pour faire varier la vitesse de rotation du moteur, et donc de l'hélice, indépendamment de la tension électrique fournie au moteur.

De plus, d'une manière particulièrement avantageuse la variation de la vitesse de rotation de l'hélice 3 peut permettre de conserver sensiblement constant un couple de l'hélice 3, par exemple en agissant conjointement sur une commande de pas de l'hélice (ou du pas des pales du rotor).

En d'autres termes, le dispositif de contrôle 1 mesure la tension électrique d'alimentation, et en conséquence fait varier un signal transmis au moteur pour faire varier la vitesse. En d'autres termes, l'invention permet d'adapter la vitesse de rotation du moteur électrique 4 pour tenir compte d'une éventuelle baisse de la tension d'alimentation et éviter une chute de la puissance mécanique fournie par le moteur. Ainsi, dans le cas d'un système connu, sans organe de contrôle 12, la tension d'alimentation fournie par une batterie diminue à mesure que la batterie se vide, Il en résulte que dans ce type de systèmes connus, la vitesse du moteur électrique diminue également puisqu'elle est liée à une fréquence émise par un onduleur en fonction de la tension d'alimentation.

A contrario, le dispositif de contrôle 1 selon l'invention permet dans une certaine mesure de décorréler la tension d'alimentation et la vitesse de rotation du moteur électrique 4. Ainsi, la tension d'alimentation est surveillée par des mesures de l'organe de mesure 11. A partir de cette mesure, il est possible d'estimer une baisse à venir. L'organe de contrôle 12 peut donc directement optimiser la vitesse de rotation du moteur électrique 4 pour éviter une chute brutale du couple fourni par ce moteur. Plus précisément, en référence à la figure 1 qui illustre la relation couple-vitesse, si la tension d'alimentation baisse, la vitesse maximale atteignable tout en conservant un couple maximal baisse aussi puisque c'est l'abscisse du point de cassure de la courbe associée à la nouvelle tension d'alimentation. L'optimisation de la vitesse effective du moteur par l'organe de contrôle consiste donc à piloter cette vitesse en fonction de la tension d'alimentation mesurée, afin qu'elle reste inférieure à l'abscisse du point de cassure de la courbe qui s'est translatée vers la gauche sur la courbe. De cette façon, le couple ne chute pas.

Comme par définition la puissance mécanique du moteur est égale au couple multiplié par la vitesse de rotation, on comprend que la puissance diminue soudainement si le couple chute.

Pour optimiser la vitesse de rotation du moteur électrique 4, l'organe de contrôle 12 émet un signal (fourni au moteur électrique). Ce signal est fonction de la tension mais ne dépend pas uniquement de la tension.

Ainsi, d'une manière particulièrement avantageuse, le contrôle sur la tension opéré par le dispositif de contrôle 1 selon l'invention permet de ne pas faire chuter la puissance mécanique délivrée par le moteur électrique 4 en cas de baisse de la tension fournie par la batterie 5, grâce à un pilotage de la vitesse de rotation du moteur en fonction de cette tension. En d'autres termes, le dispositif 1 selon l'invention opère un compromis dans lequel on accepte de réduire petit à petit la vitesse pour éviter une chute brutale du couple et donc de la puissance mécanique fournie. Le procédé de contrôle sera décrit ci-après.

Il est précisé que selon un mode de réalisation, l'organe de contrôle 12 peut comprendre un onduleur 121 connecté au moteur électrique 4. L'onduleur 121 est adapté pour recevoir la tension électrique d'alimentation et délivrer le signal fourni au moteur électrique 4 en fonction de la tension électrique d'alimentation. D'une manière préférentielle, l'onduleur 121 fait varier une fréquence du signal fourni au moteur électrique 4. Ainsi, d'une manière préférentielle, la variation de la fréquence du signal permet de faire varier la vitesse de rotation du moteur électrique 4 comme décrit ci-avant.

Selon une disposition particulièrement avantageuse, un onduleur 121 est connecté à chaque moteur électrique 4. L'onduleur 121 a pour fonction de transformer des grandeurs électriques continues en grandeurs électriques alternatives (par grandeurs électriques il est entendu la tension et l'intensité). Selon cette disposition, ce sont les variations de grandeurs électriques alternatives fournies par l'onduleur 121 qui font varier la vitesse de rotation et le couple du moteur électrique 4. Plus précisément, selon ce mode de réalisation l'onduleur 121 reçoit une tension électrique d'alimentation continue et génère un signal alternatif (par exemple une onde sinusoïdale ou pseudo-sinusoïdale). Comme indiqué précédemment, la variation du signal consiste en une modulation en fréquence du signal (c'est-à-dire une variation de la fréquence du signal).

Typiquement, l'organe de mesure 11 peut mesurer la tension aux bornes de la batterie 5. L'organe de mesure 11 peut être un voltmètre ou tout autre équipement permettant de mesurer une tension électrique.

L'organe de contrôle 12 est configuré pour commander un actionneur de pas adapté pour faire varier un pas de l'hélice 3 en fonction de la vitesse du moteur 4 pilotée par l'organe de contrôle 12, pour conserver un couple optimal fourni à l'hélice 3. Ainsi, le dispositif de contrôle 1 peut très avantageusement moduler la vitesse de rotation et le pas de l'hélice 3 pour conserver un couple sensiblement constant. D'une manière particulièrement avantageuse, la variation du pas de l'hélice 3 permet de conserver une poussée optimale pour un aéronef incorporant le dispositif de contrôle 1. En d'autres termes, l'invention permet de faire varier la vitesse de rotation du moteur électrique (et donc de l'hélice 3) et le pas de l'hélice 3 afin de maximiser la poussée délivrée par l'hélice 3, avec une tension d'alimentation imposée. En d'autres termes encore, une variation du pas de l'hélice permet de compenser une perte de poussée induite par la diminution de la vitesse de rotation. Ainsi, la variation du pas permet de rétablir la poussée de l'hélice qui fonctionne à une vitesse plus faible, car schématiquement la poussée de l'hélice est proportionnelle au produit de sa vitesse de rotation par son pas. D'une manière préférée, le pas de l'hélice 3 est commandé en fonction de la vitesse de rotation du moteur 4 électrique (et donc de l'hélice 3), qui est fonction de la fréquence du signal délivré par l'onduleur 121 au moteur. C'est ce signal de l'onduleur 121 qui peut être utilisé par le système de commande du pas pour faire varier le pas de l'hélice 3.

Tel que cela sera décrit ci-après, le dispositif de contrôle 1 peut être adapté pour acquérir des tensions aux bornes de plusieurs moteurs 4 et les comparer pour sélectionner la tension la plus faible.

### Aéronef

Selon un autre aspect, l'invention concerne un aéronef 100 comprenant un ou plusieurs propulseurs électriques selon l'invention. L'aéronef 100 comprend en outre tous les systèmes avioniques usuel dont les différents instruments de mesures des paramètres de vol.

### Procédé de contrôle

Selon un autre aspect, l'invention concerne un procédé de contrôle de la vitesse d'une hélice 3 entrainée par au moins un moteur électrique d'aéronef 100.

Le procédé de contrôle utilise un dispositif de contrôle selon l'invention.

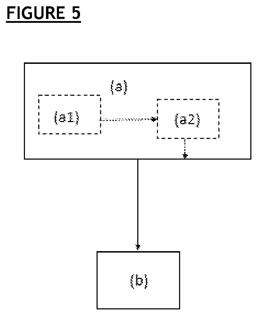

Le déroulement du procédé de contrôle est schématisé sur la figure 5.

Le procédé de contrôle comprend au moins les étapes suivantes :
(a) acquisition d'au moins une tension d'alimentation d'au moins un moteur 4 ;
(b) modification d'une vitesse de rotation de l'hélice en fonction de la tension d'alimentation acquise pour conserver un couple sensiblement constant et une poussée supérieure ou égale à une poussée minimum prédéterminée.

En outre l'étape (a) peut comprendre les sous étapes suivantes :
(a1) acquisition de plusieurs tensions d'alimentation, chaque tension d'alimentation provenant d'un moteur 4 distinct ;
(a2) identification de la tension d'alimentation acquise la plus faible.

Dans cette configuration, à l'étape (b), la tension d'alimentation acquise utilisée est la tension d'alimentation acquise la plus faible identifiée à l'étape (a2). Cette disposition permet très avantageusement d'adapter la vitesse de rotation du moteur électrique ou de de tous les moteurs électriques entrainant une même hélice à la tension d'alimentation la plus basse parmi tous les moteurs électriques afin qu'ils puissent tous continuer à délivrer de la puissance à l'hélice.

Dans le cas contraire, si certains moteurs étaient maintenus à leur vitesse de rotation initiale parce que leur tension d'alimentation propre est plus élevée, le(s) moteur(s) électrique ayant la tension la plus basse ne pourrait plus délivrer de puissance à l'hélice 3.

En outre, l'étape (b) comprend une modification d'un pas de l'hélice 3 en fonction de la tension d'alimentation acquise pour conserver un couple sensiblement constant et une poussée supérieure ou égale une poussée minimum prédéterminée.

En d'autres termes, le dispositif de contrôle 1 acquiert une ou plusieurs tensions d'alimentation du ou des moteurs (étape (a) et sous étapes (a1) et (a2)). En parallèle, un besoin de poussée minimum prédéterminée est intégré dans le dispositif de contrôle. Ce besoin de poussée minimum peut être déterminé par l'aéronef 100 et transmis au dispositif de contrôle 1 ou, peut être déterminé par le dispositif de contrôle 1 à partir de différents paramètres de vol.

D'une manière avantageuse, le dispositif de contrôle 1 a accès à des tables de données enregistrées sur les caractéristiques du moteur électrique, notamment son plan couple-vitesse (cf. figure 1) qui décrit le domaine de couple que le moteur est capable de fournir en fonction de sa vitesse de rotation, et bien sûr la tension d'alimentation mesurée, pour calculer la vitesse de rotation maximale acceptable (point de cassure d'une courbe couple-vitesse) à ne pas dépasser sous peine de faire chuter le couple moteur.

Comme expliqué précédemment, en fonction d'une tension d'alimentation mesurée et des caractéristiques du moteur électrique, le dispositif de contrôle 1 peut ajuster la vitesse de rotation. De plus, en fonction de l'ajustement de la vitesse de rotation, le dispositif de contrôle 1 peut ajuster le pas de l'hélice 3 pour compenser la perte de poussée induite par la diminution de vitesse. En fonction des caractéristiques propres du moteur, connaissant la vitesse de rotation que l'on veut obtenir, la tension nécessaire à fournir peut-être déterminée. Ainsi, le dispositif de contrôle 1 va appliquer une tension sur le moteur pour conserver un couple constant et une poussée minimale.

En d'autres termes, face à la baisse de la tension fournie par une batterie ou toute autre source d'alimentation électrique, le dispositif de contrôle 1 selon l'invention permet de contrôler le signal de tension appliqué au moteur 4 pour réduire la vitesse d'une manière choisie de sorte à conserver la poussée et donc la portance, afin de ne pas risquer une baisse brutale de la puissance délivrée par le moteur qui pourrait se produire si la vitesse du moteur était maintenue inchangée.

Ainsi, face à une ressource finie en électricité, le dispositif selon l'invention permet d'avoir une gestion adaptative de la tension électrique fournie par les batteries et/ou les autres sources d'alimentation des moteurs électriques pour la propulsion de l'aéronef 100, afin de garantir la sureté de l'aéronef.

## Revendications

1. Dispositif de contrôle (1) d'un propulseur électrique pour aéronef, ledit propulseur comprenant une hélice (3) à pas variable et au moins un moteur électrique (4) alimenté par une tension électrique d'alimentation et délivrant un couple et une vitesse de rotation pour entraîner l'hélice (3), le dispositif de contrôle (1) étant **caractérisé en ce qu'**il comprend, au moins un organe de mesure (11) de la tension électrique d'alimentation, et un organe de contrôle (12) adapté, lorsque la tension électrique d'alimentation baisse, pour faire varier un signal fourni au moteur électrique pour diminuer la vitesse de rotation de l'hélice et pour faire varier un signal fourni à un dispositif de commande du pas de l'hélice afin de modifier le pas de l'hélice pour compenser une perte de poussée induite par la diminution de la vitesse de rotation de l'hélice.

2. Dispositif (1) selon la revendication 1, dans lequel l'organe de contrôle comprend un onduleur (121) connecté au moteur électrique (4), l'onduleur (121) étant adapté pour recevoir la tension électrique d'alimentation et délivrer le signal fourni au moteur électrique (4) en fonction de ladite tension électrique d'alimentation.

3. Dispositif (1) selon la revendication 2, dans lequel l'onduleur (121) fait varier une fréquence du signal fourni au moteur électrique.

4. Dispositif (1) selon l'une quelconque des revendications précédentes dans lequel ledit au moins un organe de mesure (11) est adapté pour mesurer la tension électrique d'alimentation aux bornes d'au moins une batterie alimentant ledit au moins un moteur.

5. Propulseur électrique comprenant une hélice entrainée par au moins un moteur électrique et un dispositif de contrôle selon l'une quelconque des revendications 1 à 4.

6. Propulseur électrique selon la revendication 5, comprenant une pluralité de moteurs électriques dont les stators sont montés en série sur un même arbre de façon à sommer leurs couples, chaque stator étant connecté à une source électrique par l'intermédiaire d'un onduleur dédié.

7. Propulseur électrique selon la revendication 5, comprenant une pluralité de moteurs électriques mécaniquement connectés en parallèle par l'intermédiaire d'un même train d'engrenages de façon à sommer leurs couples, le train d'engrenages étant conformé pour que les moteurs fonctionnent à la même vitesse.

8. Propulseur électrique selon l'une des revendications 5 à 7, dans lequel une hélice est entrainée par une pluralité de moteurs électriques, chaque moteur électrique étant alimenté par une tension électrique d'alimentation distincte de celle d'un autre moteur électrique, le dispositif de contrôle (1) comprenant pour chaque tension électrique d'alimentation un organe de mesure (11) dédié.

9. Procédé de contrôle de la vitesse d'une hélice entrainée par au moins un moteur électrique, utilisant un dispositif de contrôle selon l'une quelconque des revendications 1 à 4, le procédé étant **caractérisé en ce qu'**il comprend au moins les étapes suivantes :
(a) acquisition d'au moins une tension d'alimentation d'au moins un moteur ;
(b) lorsque la tension d'alimentation baisse, diminution d'une vitesse de rotation de l'hélice et modification d'un pas de l'hélice pour conserver un couple sensiblement constant et une poussée supérieure ou égale à une poussée minimum prédéterminée.

10. Procédé selon la revendication 9 dans lequel l'étape (a) comprend les sous étapes suivantes :
(a1) acquisition de plusieurs tensions d'alimentation, chaque tension d'alimentation étant dédiée à un moteur distinct ;
(a2) identification de la tension d'alimentation acquise la plus faible,
et dans lequel à l'étape (b), la tension d'alimentation acquise utilisée est la tension d'alimentation acquise la plus faible identifiée à l'étape (a2).

11. Aéronef comprenant une hélice entrainée par au moins un moteur électrique et un dispositif de contrôle selon l'une quelconque des revendications 1 à 4.

## Patentansprüche

1. Vorrichtung zur Steuerung (1) eines elektrischen Antriebs für Flugzeug, wobei der Antrieb eine Luftschraube (3) mit verstellbarer Steigung und mindestens einen Elektromotor (4) umfasst, der mit einer elektrischen Versorgungsspannung versorgt wird und ein Drehmoment und eine Drehzahl zum Antreiben der Luftschraube (3) liefert, wobei die Steuerungsvorrichtung (1) **dadurch gekennzeichnet ist, dass** sie mindestens eine Messeinrichtung (11) für die elektrische Versorgungsspannung und eine Steuerungseinrichtung (12) umfasst, die geeignet ist, wenn die elektrische Versorgungsspannung sinkt, ein dem Elektromotor bereitgestelltes Signal zu ändern, um die Drehgeschwindigkeit der Luftschraube zu senken und um das einer Steuervorrichtung der Steigung der Luftschraube bereitgestelltes Signal zu ändern, um die Steigung der Luftschraube zu verändern, um einen von der Senkung der Drehgeschwindigkeit der Luftschraube verursachten Schubverlust auszugleichen.

2. Vorrichtung (1) nach Anspruch 1, wobei die Steuerungseinrichtung einen mit dem Elektromotor (4) verbundenen Wechselrichter (121) umfasst, wobei der Wechselrichter (121) geeignet ist, die elektrische Versorgungsspannung zu empfangen und das dem Elektromotor (4) bereitgestellte Signal in Abhängigkeit von der elektrischen Versorgungsspannung zu liefern.

3. Vorrichtung (1) nach Anspruch 2, wobei der Wechselrichter (121) eine Frequenz des dem Elektromotor bereitgestellten Signals ändert.

4. Vorrichtung (1) nach einem der vorstehenden Ansprüche, wobei die mindestens eine Messeinrichtung (11) geeignet ist, die elektrische Versorgungsspannung an den Klemmen mindestens einer Batterie zu messen, die den mindestens einen Motor versorgt.

5. Elektrischer Antrieb, der eine von mindestens einem Elektromotor angetriebene Luftschraube und eine Steuerungsvorrichtung nach einem der Ansprüche 1 bis 4 umfasst.

6. Elektrischer Antrieb nach Anspruch 5, der eine Vielzahl von Elektromotoren umfasst, deren Statoren in Reihe auf derselben Welle angebracht sind, so dass sich ihre Drehmomente addieren, wobei jeder Stator über einen speziellen Wechselrichter mit einer Stromquelle verbunden ist.

7. Elektrischer Antrieb nach Anspruch 5, der eine Vielzahl von Elektromotoren umfasst, die mechanisch über ein und dasselbe Getriebe parallel geschaltet sind, so dass sich ihre Drehmomente addieren, wobei das Getriebe so ausgelegt ist, dass die Motoren mit derselben Drehzahl laufen.

8. Elektrischer Antrieb nach einem der Ansprüche 5 bis 7, wobei eine Luftschraube von einer Vielzahl von Elektromotoren angetrieben wird, wobei jeder Elektromotor mit einer von der eines anderen Elektromotors unterschiedlichen Versorgungsspannung versorgt wird, wobei die Steuerungsvorrichtung (1) für jede Versorgungsspannung eine spezielles Messeinrichtung (11) umfasst.

9. Verfahren zur Steuerung der Drehzahl einer Luftschraube, die von mindestens einem Elektromotor angetrieben wird, unter Verwendung einer Steuerungsvorrichtung nach einem der Ansprüche 1 bis 4, wobei das Verfahren **dadurch gekennzeichnet ist, dass** es mindestens die folgenden Schritte umfasst:
(a) Erfassen mindestens einer Versorgungsspannung mindestens eines Motors;
(b) wenn die Versorgungsspannung abfällt, Senken einer Drehzahl der Luftschraube und Ändern einer Steigung der Luftschraube, um ein im Wesentlichen konstantes Drehmoment und einen Schub beizubehalten, der größer oder gleich einem vorbestimmten Mindestschub ist.

10. Verfahren nach Anspruch 9, wobei Schritt (a) die folgenden Unterschritte umfasst:
(a1) Erfassen mehrerer Versorgungsspannungen, wobei jede Versorgungsspannung für einen unterschiedlichen Motor speziell ist;
(a2) Identifizieren der niedrigsten erfassten Versorgungsspannung,
und wobei in Schritt (b) die verwendete erfasste Versorgungsspannung die niedrigste erfasste Versorgungsspannung ist, die in Schritt (a2) identifiziert wurde.

11. Flugzeug, das eine Luftschraube umfasst, die von mindestens einem Elektromotor angetrieben wird, und eine Steuerungsvorrichtung nach einem der Ansprüche 1 bis 4.

## Claims

1. Control device (1) for an electric thruster for aircraft, said propeller comprising a variable pitch propeller (3) and at least one electric motor (4) powered by an electrical supply voltage and delivering torque and rotational speed to drive the propeller (3), the control device (1) being **characterized in that** it comprises at least one member (11) for measuring the electrical supply voltage, and one control member (12) adapted, when the electrical supply voltage drops, to vary a signal supplied to the electric motor to reduce the rotational speed of the propeller and to vary a signal supplied to a propeller pitch control device in order to modify the pitch of the propeller to compensate for a loss of thrust induced by the reduction in the rotational speed of the propeller.

2. Device (1) according to claim 1, wherein the control member comprises an inverter (121) connected to the electric motor (4), the inverter (121) being adapted to receive the electrical supply voltage and deliver the signal supplied to the electric motor (4) as a function of said electrical supply voltage.

3. Device (1) according to claim 2, wherein the inverter (121) varies a frequency of the signal supplied to the electric motor.

4. Device (1) according to any of the preceding claims, wherein said at least one measuring device (11) is adapted to measure the electrical supply voltage across at least one battery supplying said at least one motor.

5. Electric thruster comprising a propeller driven by at least one electric motor and a control device according to any of claims 1 to 4.

6. Electric thruster according to claim 5, comprising a plurality of electric motors whose stators are mounted in series on the same shaft so as to sum their torques, each stator being connected to an electrical source via a dedicated inverter.

7. Electric thruster according to claim 5, comprising a plurality of electric motors mechanically connected in parallel via the same gear train so as to sum their torques, the gear train being configured so that the motors operate at the same speed.

8. Electric thruster according to any one of claims 5 to 7, in which a propeller is driven by a plurality of electric motors, each electric motor being supplied with an electrical supply voltage distinct from that of another electric motor, the control device (1) comprising a dedicated measuring member (11) for each electrical supply voltage.

9. Method for controlling the speed of a propeller driven by at least one electric motor, using a control device according to any of claims 1 to 4, the method being **characterized in that** it comprises at least the following steps:
(a) acquiring at least one supply voltage of at least one motor;
(b) when the supply voltage drops, decreasing a rotation speed of the propeller and modifying a pitch of the propeller to maintain a substantially constant torque and a thrust greater than or equal to a predetermined minimum thrust.

10. Method according to claim 9, in which step (a) comprises the following substeps:
(a1) acquiring a plurality of supply voltages, each supply voltage being dedicated to a separate motor;
(a2) identifying the lowest acquired supply voltage,
and wherein in step (b), the acquired supply voltage used is the lowest acquired supply voltage identified in step (a2).

11. Aircraft comprising a propeller driven by at least one electric motor and a control device according to any of claims 1 to 4.
